# EUROPEAN PATENT APPLICATION

(11) **EP 2 636 899 A1**
(43) Date of publication of application: **11.09.2013**
(21) Application number: 12158264.7
(22) Date of filing: 06.03.2012
(51) Int. Cl.: F03D 11/04, E04H 12/08

(54) **Tower base module with segmented base flange**

(71) Applicant: Siemens Aktiengesellschaft, 80333 München (DE)
(72) Inventor: Jensen, Martin Johan Smith, 7080 Børkop (DK); Skjaerbaek, Poul, 6920 Videbaek (DK); Thomsen, Jens, 7330 Brande (DK)

(57) **Abstract**

A tower base module (23) comprising a main portion (33) with a bottom end (9) which forms the bottom end of a wind turbine tower (3)is described. A base flange (5) comprising at least one segment is connected to the bottom end (9).

## Description

### Field of the Invention

The present invention relates to a tower base module, for example a wind turbine tower base module. It further relates to a wind turbine tower, a wind turbine and to a method for assembling a tower, for example a wind turbine tower.

### Background Art

Wind turbines are conventionally mounted on top of steel towers. The towers consist usually of a number of modules. The base modules are on many tower types equipped with a T-shaped base flange. The diameter of wind turbine towers has a tendency to increase with larger turbines. The conventionally towers have now reached the maximum diameter that easily can be transported on many roads, especially when passing bridges or tunnels. As the base flange on many conventionally towers sticks out from the structural shell and causes a higher diameter than the diameter of the tubular tower portion. This increases the transportation issues to be handled.

In the documents EP 2 006 471 A1, WO 2007/059768 A1, EP 1 561 883 A and US 2006/0213145 A1 different constructions of wind turbine towers are described.

### Description of the Invention

It is a first objective of the present invention to provide an advantageous tower base module with an increased diameter and which fulfils the transportation restrictions regarding the maximum diameter. It is a second objective to provide an advantageous wind turbine tower with an increased diameter but not causing additional transportation costs. A third objective of the present invention is to provide a wind turbine with the same advantages. A fourth objective of the present invention is to provide a method for assembling a wind turbine tower.

The first objective is solved by a tower base module as claimed in claim 1. The second objective is solved by a wind turbine tower as claimed in claim 11. The third objective is solved by a wind turbine as claimed in claim 12 and the fourth objective is solved by a method for assembling a tower as claimed in claim 13. The dependent claims define further developments of the present invention.

The inventive wind turbine tower base module comprises a main portion with a bottom end which forms the bottom end of a tower. A separate base flange is connected to the bottom end of the main portion. The base flange comprises at least one segment, preferably between two and six segments. Generally, the tower base module may have a cylindrical and/or conical and/or tubular shape, for example it may have a circular cross section.

Preferably, the inventive tower base module is a wind turbine tower base module.

The present invention has the advantage, that it allows the tower to have a larger shell diameter on the base section than conventional tubular towers. The present invention makes it possible to have larger diameter than usual and makes the transport of for example a wind turbine tower base module easier and cheaper.

Generally, the tower base module may form the complete tower. Furthermore, the tower base module may be a tower portion or tower element. The tower base module may comprise steel or may consist of steel.

Advantageously the bottom end of the tower base module has an outer diameter which is smaller than the outer diameter of the connected base flange. For example, the base flange segments may form a ring when connected to the bottom end and the outer diameter of the ring formed by the base flange segments has a larger diameter than the outer diameter of the bottom end.

The use of loose base flange segments makes it possible to use the segments for different tower. Moreover, the segments can be produced in different sizes, which allows for having the same tower for different foundation designs. For example, wider base flange segments, which means that they have a larger base area, will reduce the pressure per square meter.

Moreover, the bottom end of the main portion may have a circular cross section and the segments of the base flange may be circumferentially arranged and connected at the bottom end.

The base flange segments or the at least one base flange segment can be connected to the bottom end by means of bolts and/or stud bolts and/or nuts and/or screws. Furthermore, the bottom end and/or the base flange may comprise a connecting flange for connecting the base flange to the bottom end. For instance, the bottom end and the connecting flange can be made in one piece. Alternatively or additionally, the at least one base flange segment may be made in one piece with a connecting flange for connecting it to the bottom end.

Generally, the base flange or the base flange segments may comprise a number of holes, for example for bolts, to connect the base flange with a foundation. The holes may have different diameters. This makes it possible to use different bolt sizes depending on the respective foundation.

The connecting flange may be an L-shaped flange. The tower or the tower base module may comprise a centre line or central axis and an inner surface. Preferably, the connecting flange protrudes from the inner surface radially inward towards the centre line or central axis.

The bottom end and/or the connecting flange may comprise a number of holes for connecting the base flange to the bottom end. Moreover, the bottom end and/or the connecting flange may comprise at least one means or tool or device or element to prevent rotation of a connecting means or connecting element. The connecting means or connecting element may, for example, be a screw, nut, bolt or stud bolt. The means or element to prevent rotation can be a bolt holder or nut holder or cut or recess or notch or slot or groove.

The inventive wind turbine tower comprises a previously described tower base module. The inventive wind turbine comprises a previously mentioned wind turbine tower. The inventive wind turbine tower and the inventive wind turbine have the same advantages as previously described in conjunction with the inventive tower base module. Especially a higher wind turbine tower diameter can be obtained without increased transportation costs and without difficulties when passing bridges, tunnels etc.

The inventive method for assembling a tower, for example a wind turbine tower, is characterized in connecting a tower base module comprising a main portion with a bottom end at its bottom end to a base flange comprising at least one segment. Generally, the tower base module and the base flange may have the same features, properties and advantages as previously described in the context of the description of the inventive tower base module.

Preferably, a base flange is used, which has a larger outer diameter than the outer diameter of the bottom end of the main portion. Furthermore, at least one base flange segment, preferably a number of base flange segments, is connected to the bottom end by means of connecting flange. The used connecting flange may have the same properties and advantages as the connecting flange which was previously described in conjunction with the inventive tower base module.

For example, the base flange or the base flange segments can be connected to the bottom end by means of bolts and/or stud bolts and/or nuts and/or screws or any other connecting means. The rotation of the used connecting means can be prevented, for example by use of a bolt holder or nut holder or cut or recess or notch or slot or groove.

### Description of embodiments

Further features, properties and advantages of the present invention will become clear from the following description of embodiments in conjunction with the accompanying drawings. The embodiments do not limit the scope of the present invention which is determined by the appended claims. All described features are advantageous as separate features or in any combination with each other.
- Figure 1: schematically shows an inventive wind turbine.
- Figure 2: schematically shows the conventionally tower type solution and the present invention using a segmented base flange method.
- Figure 3: schematically shows a conventional tower base module in a sectional view.
- Figure 4: schematically shows an inventive tower base module in a sectional view.
- Figure 5: schematically shows a segment of a base flange in a perspective view.
- Figure 6: schematically shows part of the inventive tow-er base module as shown in Figure 4 in an enlarged sectional view.
- Figure 7: schematically shows part of an inventive tower base module in a sectional view.
- Figure 8: schematically shows a variant for connecting the connecting flange to the base flange.
- Figure 9: schematically shows a further variant for connecting the connecting flange to the base flange.
- Figure 10: schematically shows a further variant for connecting the connecting flange to the base flange.
- Figure 11: schematically shows part of a bolt holder.
- Figure 12: schematically shows part of an inventive tower base module in a sectional view.

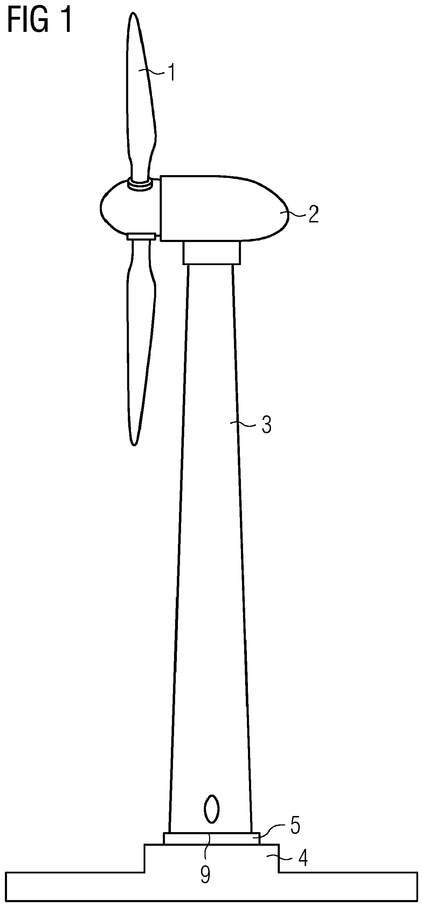

Figure 1 schematically shows an inventive wind turbine. The wind turbine comprises a rotor 1, which is supported by nacelle 2. The nacelle 2 is mounted on a tower 3. The tower can comprise a number of modules and a bottom end 9. The tower 3 is attached to a foundation 4 by means of a base flange 5.

The base flange 5 is a separate element which was connected to the tower 3 after transportation of the tower 3 to the site of installation. The base flange 5 may comprise a number of segments, for example 1, 2, 3, 4, 5, 6 or more loose segments.

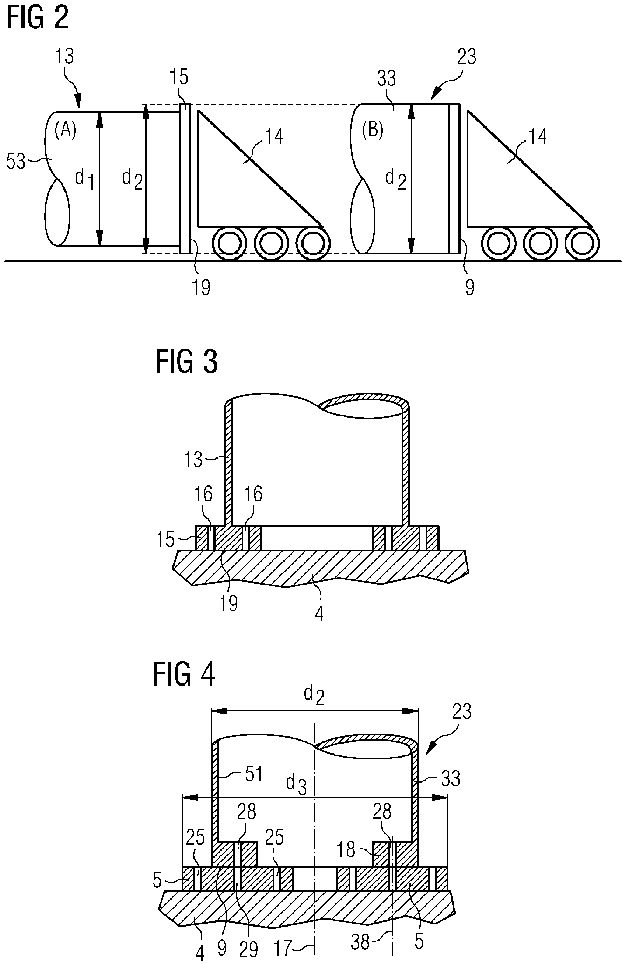

Figure 2 schematically shows the conventionally tower type solution and the present invention using a segmented base flange method. Figure 2(A) shows a truck 14 which is loaded with a base module of a conventional tower 13. The base module 13 comprises a bottom end 19. At the bottom end 19 the base module 13 comprises a T-shaped base flange 15 which is made in one piece with the base module 13. The base flange 15 has a diameter d₂. The main portion or tubular portion 53 of the tower base module 13 has a diameter d₁, which is smaller than the diameter d₂. For transporting the conventional base module 13 on truck 14 the maximum diameter is determined by the diameter d₂ of the base flange 15.

Figure 2(B) shows a truck 14, which is loaded with the inventive tower base module 23 before connecting the separate base flange 5 to it. The inventive tower base module 3 comprises a main portion or tubular portion 33 with a bottom end 9. The bottom end 9 forms the bottom end of a wind turbine tower 3. Generally, the base module 23 can be part of a wind turbine tower 3 or it can be the whole wind turbine tower 3. The main portion or tubular portion 33 of the tower base module 23 as shown in Figure 2 has a diameter d₂.

Compared with the conventional tower base module 13, as shown in Figure 2(A), the inventive tower base module 23 or more precisely its main or tubular portion 33 has an increased diameter d₂ which may correspond to the maximum allowable diameter in transport situations. Because the base flange 5 is a separate element according to the present invention, it does not determine the maximum diameter. The base flange 5 according to the present invention is preferably a segmented flange, which can be mounted to the bottom end 9 of the tower base module 23 upon arrival on the site of installation of the whole wind turbine. The segmented base flange 5 can for example consist of 1, 2, 3, 4, 5, 6 or more loose segments.

Figure 3 schematically shows a conventional tower base module 13 in a sectional view. The conventional base module 13, as shown in Figure 3, comprises a T-shaped base flange 15. The base flange 15 comprises a number of holes 16 for connecting the base module 13 to the foundation 4.

Figure 4 schematically shows an inventive tower base module 23 in a sectional view. The inventive tower base module 23 comprises a tubular portion 33 with a centre line 17. The tubular portion 33 comprises at its bottom end 9 an L-shaped flange 18. The L-shaped flange 18 or connecting flange 18 protrudes radially inwards towards the centre line 17.

The connecting flange 18 comprises a number of holes 28. The holes 28 comprise centre lines 38, which run parallel to the centre line 17 of the tubular portion 33. The holes 28 can be used to connect the tubular portion 33 to the base flange 5. The base flange 5 as shown in Figure 4 comprises a number of holes 29 for connecting the connecting flange 18 of the tubular portion 33 to the base flange 5. Moreover, the base flange 5 comprises a number of holes 25 for connecting a base flange 5 and the whole tower base module to the foundation 4.

The holes 25 which are located inside the tower may generally have a different diameter than the holes 25 which are located outside the tower. For example, the holes 25 inside the tower may be suitable for M42 bolts and the holes 25 outside the tower may be suitable for M36 bolts. Furthermore, the distance between the holes 25 inside the tower and the holes 29 for connecting the connecting flange 18 to the base flange 5 can generally be different than the distance between the holes 25 outside the tower and the holes 29 for connecting the connecting flange 18 to the base flange 5. These features provide a high flexibility for the use of the base flange for different foundations.

The tubular portion 33 comprises an outer diameter d₂. The base flange 5 comprises an outer diameter d₃, which is larger than the outer diameter d₂ of the tubular portion 33. The diameter d₃ of the base flange 5 is not restricted by transport limitations, since the base flange 5 can be transported separately and in a segmented form.

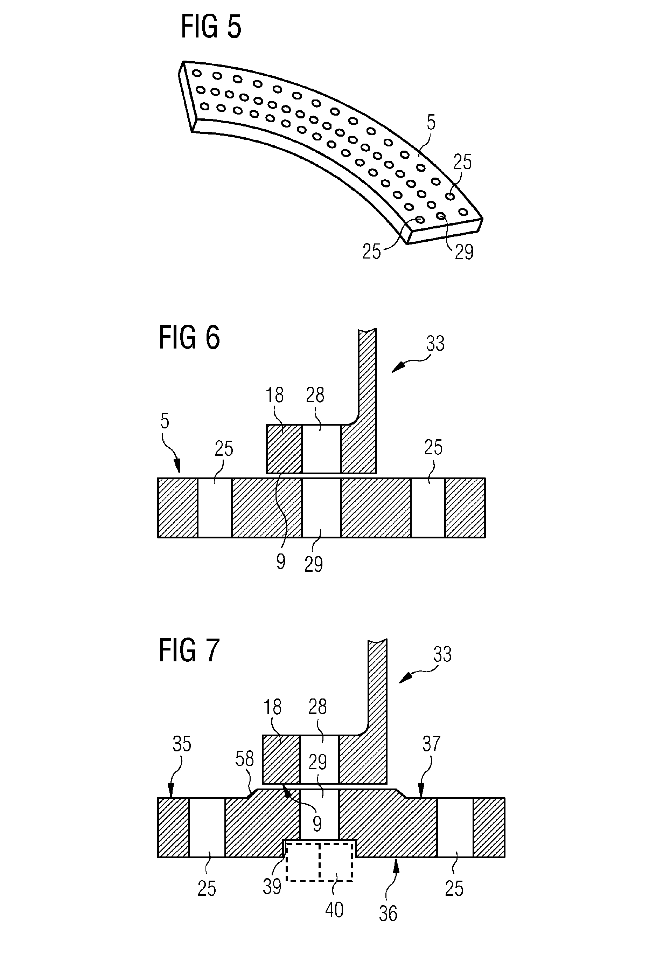

Figure 5 schematically shows a segment of a base flange 5 in a perspective view. The whole base flange 5 has a circular cross section and all segments form a ring, especially when connected to the bottom end 9 of the tubular portion 33. The segment 5 as shown in Figure 5 comprises a number of holes 29 for connecting the base flange to the bottom end 9 and a number of holes 25 for connecting the base flange to the foundation 4.

Figure 6 schematically shows part of the inventive tower base module as shown in Figure 4 in an enlarged sectional view. The base flange 5 can for example be made of structural steel or by having segments casted in steel, for example steel cast iron, GJS modular cast iron or similar. If the segments 5 are casted in steel it will be possible to have a raised part, which reduces the need for machining the whole upper part of the flange. This variant is schematically shown in Figure 7.

Figure 7 schematically shows part of an inventive tower base module in a sectional view. The base flange 35 in Figure 7 comprises an upper side 37 with an increased thickness at the portion 58 where the connecting flange 18 is connected, for example screwed, to the base flange 35. Furthermore, the base flange 35 comprises a bottom side 36. The bottom side comprises a recess, notch or groove 39 for preventing rotation of a used connecting means, in the present example for preventing rotation of a nut 40.

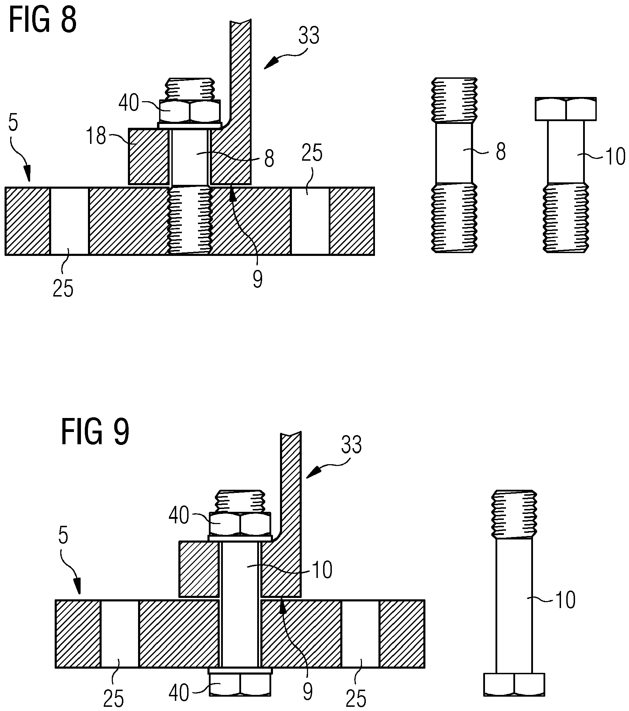

Figures 8 and 9 show further variants for connecting the connecting flange to the base flange. In Figure 8 the assembly of the connecting flange 18 and the tubular portion 33 to the base flange 5 is realized by a stud bolt 8. Alternatively, normal screws or bolts 10 can be used if the hole 29 in the base flange is threaded accordingly. Normal screws or bolts 10 can be mounted from beneath, for example of a normal unthreaded bolt hole in the segmented base flange 5. This is schematically shown in Figure 9 in a sectional view.

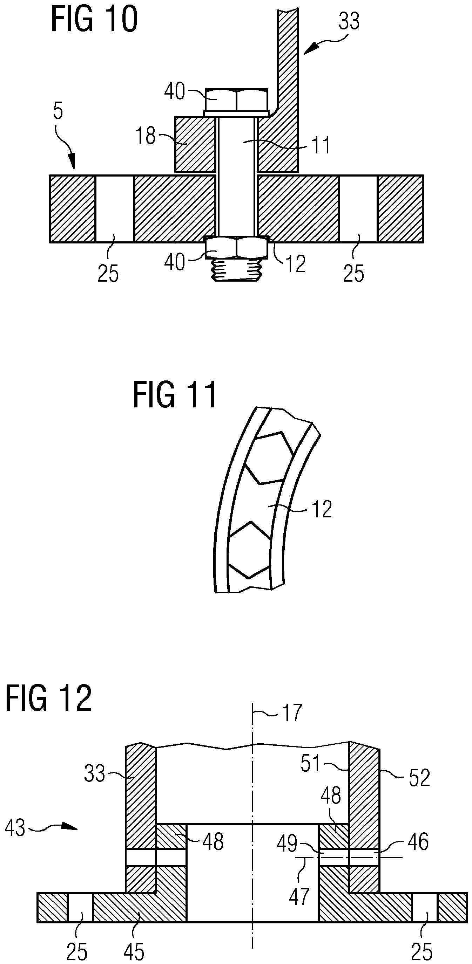

A further variant is shown in Figures 10 and 11, where the segmented base flange 5 is connected or attached to the connecting flange 18 by means of a bolt 11 and nuts 40. A rotation of the nut 40 is prevented by use of a bolt holder 12, which holds one or more nuts 40. The bolt holder is schematically shown in Figure 11. Alternatively, a rotation of the nuts 40 can be prevented by machining a groove or cut in the segmented base flange 5.

A further embodiment of the present invention is shown in Figure 12. Figure 12 schematically shows part of an inventive tower base module 43 in a sectional view. The tubular portion 33 comprises a centre line 17. It further comprises a number of holes 46 for connecting the tubular portion 33 to the base flange 45. The holes 46 comprise a centre line 47. The centre line 47 runs perpendicular to the centre line 17 of the tubular portion 33. The base flange or the base flange segments 45 comprise holes 25 for connecting the tower base module to the foundation 4.

The base flange 45 further comprises a connecting flange 48. The connecting flange 48 comprises a number of holes 49 for connecting the base flange with the tubular portion 33. The holes 49 have a centre line which corresponds to the centre line 47 of the corresponding holes 46 in the tubular portion 33. Generally the connecting flange 48 can be attached to the inner surface 51 or to the outer surface 52 of the main portion or tubular portion 33. In Figure 12 the connecting flange 48 is attached to the inner surface 51.

## Claims

1. A tower base module (23) comprising a main portion (33) with a bottom end (9) which forms the bottom end of a wind turbine tower (3),
**characterised in that**
a base flange (5) comprising at least one segment is connected to the bottom end (9).

2. The tower base module (23) as claimed in claim 1, **characterised in that**
the base flange (5) comprises between 2 and 6 segments.

3. The tower base module (23) as claimed in claim 1 or claim 2,
**characterised in that**
the bottom end (9) has an outer diameter d₂ which is smaller than the outer diameter d₃ of the connected base flange (5).

4. The tower base module (23) as claimed in any of the claims 1 to 3,
**characterised in that**
the at least one base flange segment (5) is connected to the bottom end (9) by means of bolts (11) and/or stud bolts (8) and/or nuts (40) and/or screws (10).

5. The tower base module (23) as claimed in any of the claims 1 to 4,
**characterised in that**
the bottom end (9) or the base flange (5) comprises a connecting flange (18) for connecting the base flange (5) to the bottom end (9).

6. The tower base module (23) as claimed in claim 5, **characterised in that**
the connecting flange (18) is an L-shaped flange.

7. The tower base module (23) as claimed in claim 5 or claim 6,
**characterised in that**
the tower (3) comprises a centre line (17) and an inner surface (51) and the connecting flange (18) protrudes from the inner surface (51) radially inward towards the centre line (17).

8. The tower base module (23) as claimed in any of the claims 1 to 7,
**characterised in that**
the bottom end (9) and/or the connecting flange (5) comprise a number of holes (28) for connecting the base flange (5) to the bottom end (9).

9. The tower base module (23) as claimed in any of the claims 1 to 8,
**characterised in that**
the bottom end (9) and/or the connecting flange (5) comprise at least one means (12) to prevent rotation of a connecting element.

10. The tower base module (23) as claimed in claim 9, **characterised in that**
the means (12) to prevent rotation is a bolt holder or nut holder or cut or recess or notch or slot or groove.

11. A wind turbine tower (3) comprising a tower base module (23) as claimed in any of the claims 1 to 10.

12. A wind turbine comprising a wind turbine tower (3) as claimed in claim 11.

13. A method for assembling a tower (3),
**characterised in**
connecting a tower base module (23) comprising a main portion (33) with a bottom end (9) at its bottom end (9) to a base flange (5) comprising at least one segment.

14. The method as claimed in claim 13,
**characterised in**
using a base flange (5) with a larger outer diameter than the outer diameter of the bottom end (9) of the main portion (33).

15. The method as claimed in claim 13 or claim 14, **characterised in**
connecting the at least one base flange segment (5) to the bottom end (9) by means of a connecting flange (18).
